# EUROPÄISCHE PATENTSCHRIFT

(11) **EP 2 145 712 B1**
(45) Veröffentlichungstag und Bekanntmachung des Hinweises auf die Patenterteilung: **10.05.2017**
(21) Anmeldenummer: 09014037.7
(22) Anmeldetag: 13.02.2002
(51) Int. Cl.: B23D 79/02, B23D 79/00

(54) **Vorrichtung zum thermischen Entgraten von Werkstücken**
Device for thermal deburring of workpieces
Dispositif pour l'ébavurage thermique d'une pièce à usiner

(30) Priorität: 15.02.2001 DE 10106968
(43) Veröffentlichungstag der Anmeldung: 20.01.2010
(62) Teilanmeldung aus: 02003308.0
(73) Patentinhaber: Extrude Hone Ltd., Country Clare (IE)
(72) Erfinder: Conrad, Hans-Jürgen, 71277 Rutenheim (DE); Kaercher, Jochen, 70378 Stuttgart (DE); Breitbach, Benedikt, 71254 Ditzingen (DE)
(74) Vertreter: Prinz & Partner mbB

(56) Entgegenhaltungen:
- WO-A1-84/04715
- DE-C1- 19 743 076
- FR-A- 2 282 602
- GB-A- 1 353 031
- US-A- 4 025 062
- US-A- 4 474 547

## Beschreibung

### Stand der Technik

Die Erfindung betrifft eine Vorrichtung zum thermischen Entgraten von Werkstücken gemäß dem Oberbegriff des Patentanspruchs.

Eine derartige Vorrichtung geht beispielsweise aus der US 4 025 062 A hervor. Bei Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinem Volumen besonders viel Wärme aufnehmen und somit oxidiert bzw. verbrannt werden. Der Hitzeschock wird durch das Abbrennen eines Prozessgases, das vorzugsweise aus einem Brenngas-Sauerstoffgemisch besteht, erzeugt, wobei z. B. Wasserstoff oder Erdgas bzw. Methan als Brenngas verwendet werden kann.

Die verschiedenen Komponenten des Prozessgases werden aus Vorratsbehältern über Zuführleitungen zu einem Zentralventil geführt, in dem die Komponenten zusammengeführt werden.

Danach wird das Prozessgas in die Entgratungskammer eingebracht. Zum Befüllen der Entgratungskammer sind ein oder zwei Dosierzylinder vorgesehen, mit denen die Komponenten des Prozessgases zugeführt werden. Dabei wird das Mischungsverhältnis des Prozessgases durch die unterschiedlichen Durchmesser der Dosierzylinder und das Druckverhältnis (Brenngas zu Sauerstoff), mit dem die Dosierzylinder gefüllt werden, bestimmt, und der Fülldruck der Entgratungskammer wird durch die Hublänge des Dosierzylinders bestimmt. Das Druckverhältnis in den Dosierzylindern kann mittels Druckminderer von Hand geregelt werden. Beispielsweise können in der Sauerstoffleitung zwei Druckminderer parallel geschaltet sein, um von einem Bedienpult aus zwei verschiedene Mischungsverhältnisse anwählen zu können. Um die großen Entgratungskammern im Hochdruckbetrieb zu füllen, müssen die Dosierzylinder zwei- bis dreimal einen kompletten Hub ausführen.

Diese bekannte Ausgestaltung hat diverse Mängel. Das Befüllen der Entgratungskammer geht relativ langsam vor sich, da die Dosierzylinder mehrmals pumpen müssen, um die Entgratungskammer mit dem Prozessgas zu befüllen. Durch eine Vielzahl von Bauteilen und einen hohen Verrohrungsaufwand ergeben sich lange Montagezeiten und relativ große Möglichkeiten für Montagefehler, die z. B. zu Leckagen o. dgl. führen können. Da das Zündrohr infolge vorangegangener Zündvorgänge heiße Stellen aufweist, kann es darüber hinaus zur Selbstentzündung kommen.

Das Dokument US 4,025,062 offenbart ein Verfahren zum Befüllen einer Entgratungskammer in einer Vorrichtung zum thermischen Entgraten von Werkstücken unter Verwendung von zwei Dosierzylindern, wobei in einem ersten Schritt gleichzeitig der erste Dosierzylinder mit Brenngas, der zweite Dosierzylinder mit Sauerstoff und die Entgratungskammer mit einer Mischung von Brenngas und Sauerstoff gefüllt wird. Danach erfolgt in einem zweiten Schritt ein gleichzeitiges Einschieben des im ersten Dosierzylinder befindlichen Brenngases und des im zweiten Dosierzylinder befindlichen Sauerstoffes in die Entgratungskammer. Das Dokument US 4,025,062 offenbart ferner eine Vorrichtung zum thermischen Entgraten von Werkstücken, wobei die Entgratungskammer über je eine Zuführleitung mit den Vorratsbehältern für Brenngas und Sauerstoff verbunden ist und wobei zwei Dosierzylinder vorgesehen sind, die jeweils mit einer der beiden Zuführleitungen für Brenngas und Sauerstoff verbunden sind.

### Vorteile der Erfindung

Die erfindungsgemäße Vorrichtung erbringt demgegenüber zunächst den Vorteil, dass ein schnelleres Befüllen der Entgratungskammer ermöglicht wird, da der Dosierzylinder nur einen einzigen Hub ausführen und nur einmal pumpen muss. Infolge der geringeren Anzahl von Bauteilen und dem verringerten Verrohrungsaufwand ergeben sich geringere Montagezeiten und auch eine verringerte Möglichkeit von Montagefehlern, so dass Leckagen o. dgl. besser vermieden werden können. Weiterhin wird die Gefahr von Selbstentzündungen verringert, da sich das Prozessgasgemisch zunächst in der Entgratungskammer bildet und erst bei dem Hub vom Dosierzylinder im Zündrohr ein brennbares Gemisch eingeschoben wird. Zu diesem Zeitpunkt haben sich aber heiße Stellen im Zündrohr bereits abgekühlt. Dadurch, dass sowohl das Brenngas als auch der Sauerstoff gleichzeitig in die Entgratungskammer geschoben werden, ist sichergestellt, dass sich am Ende des Dosiervorganges im Zündrohr immer ein zündfähiges Gemisch befindet.

Die Reihenfolge der verschiedenen Verfahrensschritte ist beliebig; es muss lediglich sichergestellt sein, dass der Verfahrensschritt 4. (Einschieben des im Dosierzylinder befindlichen Brenngases und des Sauerstoffes in die Entgratungskammer) unmittelbar vor der Zündung des Prozessgases erfolgt.

Die erfindungsgemäße Vorrichtung weist zumindest die folgenden Komponenten auf:
- eine Entgratungskammer.
- eine Gasquelle für Brenngas,
- eine Gasquelle für Sauerstoff,
- eine erste direkte Zuführleitung von der Gasquelle für Brenngas hin zur Entgratungskammer,
- eine zweite direkte Zuführleitung von der Gasquelle für Sauerstoff hin zur Entgratungskammer
- einen einzelnen Dosierzylinder, der über eine erste Verbindungsleitung mit der ersten Zuführleitung und über eine zweite Verbindungsleitung mit der zweiten Zuführleitung direkt verbunden ist,
- ein Druckregelventil, das zwischen dem Dosierzylinder und der Gasquelle für Brenngas in der ersten direkten Zuführleitung angeordnet ist,
- ein Druckregelventil, das zwischen dem Dosierzylinder und der Gasquelle für Sauerstoff in der zweiten direkten Zuführleitung angeordnet ist,
- ein Ventil, das zwischen dem Druckregelventil und dem Dosierzylinder in der ersten Verbindungsleitung angeordnet ist,
- ein Ventil, das zwischen dem Druckregelventil und dem Dosierzylinder in der zweiten Verbindungsleitung angeordnet ist,
- ein Ventil, das zwischen dem Ventil und einem Zentralventil in der ersten direkten Zuführleitung angeordnet ist,
- ein Ventil, das zwischen dem Ventil und dem Zentralventil in der zweiten direkten Zuführleitung angeordnet ist,
wobei die erste Zuführleitung und die zweite Zuführleitung in eine Prozessgaszuführleitung münden, die das Zentralventil aufweist.

Infolge dieser Maßnahmen ergibt sich ein gegenüber dem Stand der Technik deutlich verringerter Verrohrungsaufwand, der nicht nur zu einem schnelleren Ablauf des gesamten Prozesses, sondern auch zu einer vereinfachten Montage und zu geringeren Wartungskosten führt.

Durch weitere Maßnahmen sind vorteilhafte Weiterbildungen und Verbesserungen des angegebenen Verfahrens bzw. der Vorrichtung möglich.

Vorzugsweise erfolgt das Füllen des Dosierzylinders mit Brenngas und Sauerstoff während eines Werkstücktransportes in die Entgratungskammer und/oder während des Schließvorganges der Entgratungskammer. Hierdurch wird eine weitere Verkürzung des gesamten Prozesses erreicht, da die Zeit zum Einbringen des Werkstückes und zum Verschließen der Entgratungskammer bereits zum Befüllen des Dosierzylinders genutzt werden kann und somit das Befüllen des Dosierzylinders keine unnötige Totzeit darstellt.

Der gesamte Entgratungsprozess kann noch weiter beschleunigt werden, wenn nach einer bevorzugten Weiterbildung Brenngas und Sauerstoff gleichzeitig in den Dosierzylinder eingefüllt werden.

Das Befüllen des Dosierzylinders und das Befüllen der Entgratungskammer mit Sauerstoff und Brenngas erfolgt bevorzugt druckgeregelt bzw. mengengeregelt direkt aus Vorratsbehältern für das Brenngas und den Sauerstoff. Infolge dieser Maßnahme ist gewährleistet, dass die Komponenten des Prozessgases mit geringem Verrohrungsaufwand von den Vorratsbehältern zum Dosierzylinder bzw. zur Entgratungskammer gefördert werden können.

Nach einer bevorzugten Weiterbildung erfolgt nach der Vorbefüllung (direkt) das Einschieben des im Dosierzylinder befindlichen Brenngases und des Sauerstoffes in die Entgratungskammer unmittelbar vor der Zündung des Prozessgases. Somit ist sichergestellt, dass erst unmittelbar vor der Zündung ein zündfähiges Gasgemisch im Zündkanal vorhanden ist.

Wenn man bei der Sollwertvorgabe des Kammerfülldruckes die Erwärmung der Entgratungskammer mitberücksichtigt, ist stets eine gleichbleibende Energiemenge in der Entgratungskammer sichergestellt.

Nach einer bevorzugten Weiterbildung der erfindungsgemäßen Vorrichtung weist der Dosierzylinder zwei Kammern auf, die gleichzeitig gefüllt bzw. entleert werden können. Dies gewährleistet nicht nur einen schnelleren Füllvorgang, sondern stellt auch sicher, dass die einzelnen Komponenten des Prozessgases getrennt voneinander im Dosierzylinder aufbewahrt werden. Dies trägt zur Sicherheit der gesamten Anlage bei.

Damit die einzelnen Verfahrensschritte richtig und zeitgenau ablaufen können, ist bevorzugt in jeder Zuführleitung mindestens ein Ventil vorgesehen. Dieses Ventil kann ein Absperrventil oder ein Druckregelventil sein.

Damit die Komponenten des Prozessgases sicher in die Entgratungskammer eingespeist werden können, ist nach einer bevorzugten Weiterbildung zwischen den Vorratsbehältern und der Entgratungskammer ein Zentralventil vorgesehen, in das die Zuführleitungen für Sauerstoff und Brenngas münden. Durch das Zentralventil ist auch gewährleistet, dass Hitzebeeinträchtigungen durch den thermischen Entgratungsprozess weitestgehend vom Zentralventil aufgenommen werden und das übrige System nicht belasten. In den Zuführleitungen zwischen dem Dosierzylinder und dem Zentralventil ist jeweils ein weiteres Ventil vorgesehen. Somit können die Zuführleitungen gegenüber dem Zentralventil gesperrt werden, ohne dass ein Befüllen des Dosierzylinders verhindert wird.

### Zeichnung

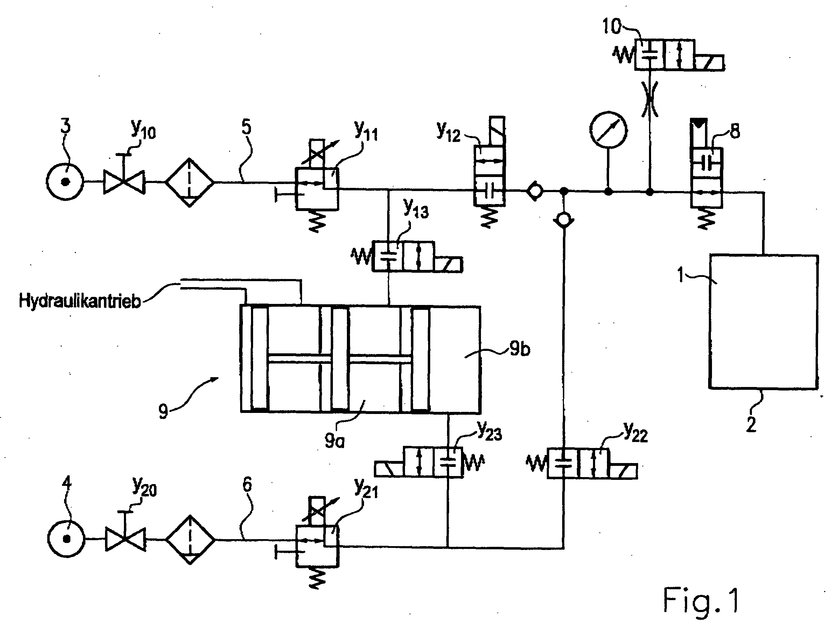

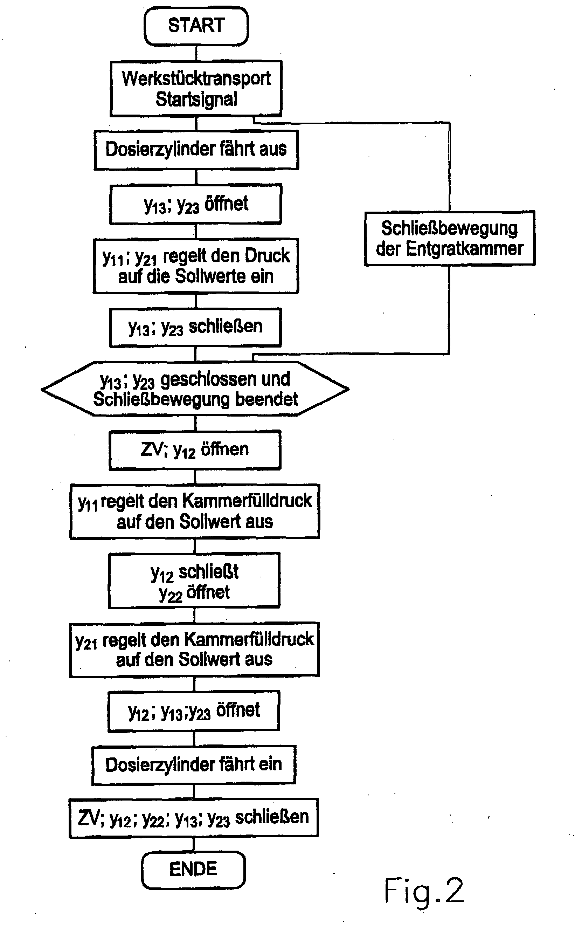

Ein Ausführungsbeispiel der Erfindung ist in den Zeichnungen dargestellt und in der nachfolgenden Beschreibung unter Angabe weiterer Vorteile und Merkmale näher erläutert. Die Figur 1 zeigt einen Schaltplan, aus dem erkennbar ist, wie die erfindungsgemäße Vorrichtung aufgebaut ist, und die Figur 2 zeigt ein Flussdiagramm des Ablaufes des Verfahrens.

Zunächst wird auf Figur 1 eingegangen und die erfindungsgemäße Vorrichtung erläutert.

In Figur 1 ist schematisch die erfindungsgemäße Vorrichtung in einem Schaltplan dargestellt. Man erkennt eine Entgratungskammer 1, die mittels eines Deckels 2 verschließbar ist. In den Brennraum der Entgratungskammer 1 kann ein nicht dargestelltes Werkstück eingebracht werden. Der Dekkel 2 wird vor dem Füllen des Brennraums mit einem Brenngas-Sauerstoffgemisch und Zünden desselben an die Stirnfläche der Entgratungskammer 1 angepresst.

Die Gaskomponenten des Brenngas-Sauerstoffgemisches werden aus je einem Vorratsbehälter 3 oder einer sonstigen Gasquelle für Brenngas bzw. 4 für Sauerstoff über druckfeste Zuführleitungen 5 bzw. 6 zu einem Zentralventil 8 geführt. Von dem Zentralventil 8 strömt das Brenngas-Sauerstoffgemisch in die Entgratungskammer 1. Zum Zünden des Gasgemisches dient eine nicht dargestellte Zündeinrichtung, beispielsweise eine Zündkerze.

Zwischen den Vorratsbehältern 3 bzw. 4 und dem Zentralventil 8 ist ein Dosierzylinder 9 vorgesehen, der vorzugsweise über einen Hydraulikantrieb ansteuerbar ist. Der Dosierzylinder 9 ist mit jeder der Zuführleitungen 5 bzw. 6 verbunden. Er weist zwei getrennte Kammern 9a und 9b auf. Die eine Kammer 9a dient zur Aufnahme des Brenngases und die andere Kammer 9b dient zur Aufnahme des Sauerstoffes.

Zwischen dem Dosierzylinder 9 und dem Vorratsbehälter 3 bzw. 4 ist je ein Druckregelventil y₁₁ bzw. y₂₁ vorgesehen. Außerdem können die Vorratsbehälter 3, 4 über je ein Ventil y₁₀ bzw. y₂₀ geschlossen bzw. geöffnet werden. Weiterhin ist zwischen den Druckregelventilen y₁₁ und y₂₁ und dem Dosierzylinder 9 in jeder Zuführleitung 5 bzw. 6 ein Ventil y₁₃ bzw. y₂₃ vorgesehen, mit dessen Hilfe der Dosierzylinder 9 gegenüber den Zuführleitungen 5 bzw. 6 abgesperrt werden kann. Zwischen den Ventilen y₁₃ und y₂₃ und dem Zentralventil 8 ist weiterhin in jeder Zuführleitung 5 bzw. 6 ein Ventil y₁₂ bzw. y₂₂ vorgesehen.

Die Vorrichtung kann weiterhin mit einer Notentlüftung 10 versehen sein, die im dargestellten Ausführungsbeispiel im Bereich des Zentralventils 8 vorgesehen ist. Über diese Notentlüftung 10 kann der in der Entgratungskammer 1 befindliche Überdruck bei einem störfall z. B. über eine Rohrleitung zu einer Absaugung o. dgl. abgelassen werden.

Die Ventile y₁₂, y₁₃, y₂₂ und y₂₃ können elektrisch geöffnet und das Zentralventil 8 hydraulisch geschlossen werden. Die Rückstellung der Ventile kann durch Federkraft oder elektrisch oder hydraulisch erfolgen.

Die Zuführleitungen 5 und 6 für Brenngas und Sauerstoff können, ausgehend von den Vorratsbehältern 3 und 4, noch diverse Armaturen, wie Abstellventile, Druckreduzierventile, Dosierventile, Durchflussmengenmesser, Filter und Absperrventile usw. enthalten.

Die zur Steuerung der verschiedenen Ventile y₁₀, y₁₁, y₁₂, Y₁₃, y₂₀, y₂₁, y₂₂ und y₂₃ sowie des Zentralventils 8 erforderlichen Hydraulikzylinder, Verbindungen, Armaturen und Anschlüsse sind der Übersichtlichkeit halber nicht dargestellt.

In Figur 2 wird anhand eines Flussdiagramms der Ablauf des Verfahrens erläutert. Dabei wird vorausgesetzt, dass die Ventile y₁₀ und y₂₀ in den Zuführleitungen 5 und 6 geöffnet sind.

Das Verfahren beginnt, indem ein Werkstücktransport-Startsignal ausgelöst wird, welches dafür sorgt, dass ein neues nicht dargestelltes Werkstück in die Entgratungskammer 1 gefördert wird. Zu diesem Zeitpunkt ist die Entgratungskammer 1 geöffnet.

Als nächstes fährt der Dosierzylinder 9 aus und die Ventile y₁₃ und y₂₃ werden geöffnet. Der Dosierzylinder 9 wird mit den Komponenten des Prozessgases gefüllt, wobei die Ventile y₁₁ und y₂₁ den Druck auf die Sollwerte einregeln. Dann schließen die Ventile y₁₃ und y₂₃.

Diese vorstehend erläuterten Verfahrensschritte laufen ab, während das Werkstück in die Entgratungskammer eingebracht und/oder die Entgratungskammer 1 mit dem Deckel 2 verschlossen wird. Der Zustand, in dem die Ventile y₁₃ und y₂₃ und die Entgratungskammer 1 geschlossen sind, ist im Flussdiagramm durch einen Kasten mit spitzen Ecken dokumentiert.

Als nächstes werden das Zentralventil 8 und das Ventil y₁₂ geöffnet. Nun ist die Entgratungskammer 1 über die Zuführleitung 5 direkt mit dem Vorratsbehälter 3, der z. B. das Brenngas enthält, verbunden. Das in der Zuführleitung 5 angeordnete Ventil y₁₁ regelt den Kammerfülldruck auf den Sollwert aus. Dann schließt das Ventil y₁₂ und das Ventil y₂₂ öffnet. Nun ist die Entgratungskammer 1 über die Zuführleitung 6 direkt mit dem Vorratsbehälter 4, der z. B. den Sauerstoff enthält, verbunden. Auch in der Zuführleitung 6 ist ein Ventil y₂₁ vorgesehen, das den Kammerfülldruck auf den Sollwert ausregelt.

Im nächsten Verfahrensschritt öffnen die Ventile y₁₂, y₁₃ und y₂₃. Nun fährt der Dosierzylinder 9 ein. Danach schließen das Zentralventil 8 und die Ventile y₁₂, y₂₂, y₁₃ und y₂₃ und das erfindungsgemäße Verfahren ist beendet.

Der nun folgende thermische Entgratungsvorgang wird durch den Zündvorgang eingeleitet. Dieser ist bekannt und wird deshalb nicht weiter erläutert.

Es sei in diesem Zusammenhang nochmals ausdrücklich darauf hingewiesen, dass die Reihenfolge der einzelnen Verfahrensschritte beliebig ist. Es muss nur sichergestellt sein, dass das gleichzeitige Einschieben des im Dosierzylinder befindlichen Brenngases und des Sauerstoffes in die Entgratungskammer erst unmittelbar vor der Zündung des Prozessgases erfolgt.

Die Dosierung mit Brenngasgemisch und Dosierzylinder kann auch nur mit einem Gaskolben erfolgen, obgleich dies in den Figuren nicht dargestellt ist. Hierbei bleibt die Ventilanordnung wie oben beschrieben. Lediglich die Druckeinstellung muss verändert werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den im Anspruch definierten Umfang der Erfindung zu verlassen.

## Patentansprüche

1. Vorrichtung zum Entgraten von Werkstücken mit zumindest folgenden Komponenten:
- eine Entgratungskammer (1),
- eine Gasquelle (3) für Brenngas,
- eine Gasquelle (4) für Sauerstoff,
- eine erste direkte Zuführleitung (5) von der Gasquelle (3) für Brenngas hin zur Entgratungskammer (1), und
- eine zweite direkte Zuführleitung (6) von der Gasquelle (4) für Sauerstoff hin zur Entgratungskammer (1), **gekennzeichnet durch**
- einen einzelnen Dosierzylinder (9), der über eine erste Verbindungsleitung mit der ersten Zuführleitung (5) und über eine zweite Verbindungsleitung mit der zweiten Zuführleitung (6) direkt verbunden ist,
- ein Druckregelventil (y₁₁), das zwischen dem Dosierzylinder (9) und der Gasquelle (3) für Brenngas in der ersten direkten Zuführleitung (5) angeordnet ist,
- ein Druckregelventil (y₂₁), das zwischen dem Dosierzylinder (9) und der Gasquelle (4) für Sauerstoff in der zweiten direkten Zuführleitung (6) angeordnet ist,
- ein Ventil (y₁₃), das zwischen dem Druckregelventil (y₁₁) und dem Dosierzylinder (9) in der ersten Verbindungsleitung angeordnet ist,
- ein Ventil (y₂₃), das zwischen dem Druckregelventil (y₂₁) und dem Dosierzylinder (9) in der zweiten Verbindungsleitung angeordnet ist,
- ein Ventil (y₁₂), das zwischen dem Ventil (y₁₃) und einem Zentralventil (8) in der ersten direkten Zuführleitung (5) angeordnet ist,
- ein Ventil (y₂₂), das zwischen dem Ventil (y₂₃) und dem Zentralventil (8) in der zweiten direkten Zuführleitung (6) angeordnet ist,
wobei die erste Zuführleitung (5) und die zweite Zuführleitung (6) in eine Prozessgaszuführleitung münden, die das Zentralventil (8) aufweist.

## Claims

1. A device for deburring workpieces, comprising at least the following components:
- a deburring chamber (1);
- a gas source (3) for fuel gas;
- a gas source (4) for oxygen;
- a first direct supply line (5) from the gas source (3) for fuel gas towards the deburring chamber (1); and
- a second direct supply line (6) from the gas source (4) for oxygen towards the deburring chamber (1),
**characterized by**
- a single metering cylinder (9) which is directly connected with the first supply line (5) by means of a first connecting line and with the second supply line (6) by means of a second connecting line;
- a pressure control valve (y₁₁) which is arranged in the first direct supply line (5) between the metering cylinder (9) and the gas source (3) for fuel gas;
- a pressure control valve (y₂₁) which is arranged in the second direct supply line (6) between the metering cylinder (9) and the gas source (4) for oxygen;
- a valve (y₁₃) which is arranged in the first connecting line between the pressure control valve (y₁₁) and the metering cylinder (9);
- a valve (y₂₃) which is arranged in the second connecting line between the pressure control valve (y₂₁) and the metering cylinder (9);
- a valve (y₁₂) which is arranged in the first direct supply line (5) between the valve (y₁₃) and a central valve (8);
- a valve (y₂₂) which is arranged in the second direct supply line (6) between the valve (y₂₃) and the central valve (8),
the first supply line (5) and the second supply line (6) opening into a process gas supply line which includes the central valve (8).

## Revendications

1. Dispositif d'ébarbage de pièces à usiner présentant au moins les composants suivants :
- une chambre d'ébarbage (1),
- une source de gaz (3) pour du gaz combustible,
- une source de gaz (4) pour de l'oxygène,
- un premier conduit d'amenée direct (5) de la source de gaz (3) pour du gaz combustible vers la chambre d'ébarbage (1), et
- un deuxième conduit d'amenée direct (6) de la source de gaz (4) pour de l'oxygène vers la chambre d'ébarbage (1),
**caractérisé par**
- un cylindre de dosage (9) individuel qui est directement raccordé au premier conduit d'amenée (5) par un premier conduit de raccordement et au deuxième conduit d'amenée (6) par un deuxième conduit de raccordement,
- un clapet de réglage de pression (y₁₁) qui est agencé entre le cylindre de dosage (9) et la source de gaz (3) pour du gaz combustible dans le premier conduit d'amenée direct (5),
- un clapet de réglage de pression (y₂₁) qui est agencé entre le cylindre de dosage (9) et la source de gaz (4) pour de l'oxygène dans le deuxième conduit d'amenée direct (6),
- un clapet (y₁₃) qui est agencé entre le clapet de réglage de pression (y₁₁) et le cylindre de dosage (9) dans le premier conduit de raccordement,
- un clapet (y₂₃) qui est agencé entre le clapet de réglage de pression (y₂₁) et le cylindre de dosage (9) dans le deuxième conduit de raccordement,
- un clapet (y₁₂) qui est agencé entre le clapet (y₁₃) et un clapet central (8) dans le premier conduit d'amenée direct (5),
- un clapet (y₂₂) qui est agencé entre le clapet (y₂₃) et le clapet central (8) dans le deuxième conduit d'amenée direct (6),
le premier conduit d'amenée (5) et le deuxième conduit d'amenée (6) débouchant dans un conduit d'amenée de gaz de procédé comprenant le clapet central (8).
